(19) Europäisches Patentamt
European Patent Office
Office européen des brevets

(11) **EP 3 135 529 B1**

(12) **EUROPÄISCHE PATENTSCHRIFT**

(45) Veröffentlichungstag und Bekanntmachung des Hinweises auf die Patenterteilung:
**22.08.2018 Patentblatt 2018/34**

(51) Int Cl.:
***B60L 11/18*** *(2006.01)*

(21) Anmeldenummer: **16185234.8**

(22) Anmeldetag: **23.08.2016**

(54) **ZENTRALE LADESTEUERUNG FÜR EINE MEHRZAHL VON ELEKTROFAHRZEUGEN**

CENTRAL CHARGE CONTROLLER FOR A A PLURALITY OF ELECTRIC VEHICLES

COMMANDE CENTRALE DE CHARGE POUR UNE PLURALITÉ DE VÉHICULES ÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2015 DE 102015114002**

(43) Veröffentlichungstag der Anmeldung:
**01.03.2017 Patentblatt 2017/09**

(73) Patentinhaber: **Deutsche Post AG**
**53113 Bonn (DE)**

(72) Erfinder:
• **Salomon, Jörg**
**53113 Bonn (DE)**

• **Schmitt, Fabian**
**4731 Eynatten (BE)**
• **Frangenheim, Jens**
**52353 Merken (DE)**
• **Schottdorf, Leon Enver**
**53842 Troisdorf (DE)**

(74) Vertreter: **Michalski Hüttermann & Partner**
**Patentanwälte mbB**
**Speditionstraße 21**
**40221 Düsseldorf (DE)**

(56) Entgegenhaltungen:
EP-A1- 2 746 093      WO-A1-2015/041366
DE-A1-102011 087 407

**Beschreibung**

Die Erfindung betrifft ein Verfahren zur zentralen Ladesteuerung einer Mehrzahl Elektrofahrzeuge an einem Betriebshof, mit einer computergestützten zentralen Ladeleitwarte, welche zur drahtlosen Kommunikation mit in den jeweiligen Elektrofahrzeugen vorgesehenen Steuerungen ausgestaltet ist, und wobei die Elektrofahrzeuge zum Aufladen einer jeweiligen Batterie gemäß einem Ladeprofil mit einem Ladepunkt des Betriebshofes verbindbar sind.

Der Anteil an Elektrofahrzeugen, auch Elektroautos, E-Auto, E-Mobil oder Elektromobil genannt, steigt derzeit rasant an. Bis zum Jahr 2020 werden nach jüngsten Schätzungen allein ein Deutschland eine Million Elektroautos erwartet, wovon der überwiegende Anteil rein elektrisch angetriebener Fahrzeuge in Flotten- und Car-Sharing-Anwendungen zu finden sein wird. Im kommerziellen Flotteneinsatzbereich ist die elektrische Infrastruktur eines die Flotte beherbergenden Betriebshofs vielfach ausschlagegebend für Zuverlässigkeit und Einsatzfähigkeit der Flotte. Eine hohe Gleichzeitigkeit der Ladevorgänge batteriebetriebener Elektroautos kann zu Spannungseinbrüchen und unsymmetrischen Lastfällen bis hin zu Sicherheitsabschaltungen führen, da die kumulierte Ladeleistung der Elektrofahrzeuge einzelne Netzknoten oder gar den Netzanschlusspunkt des Betriebshofs überlasten kann.

Viele Elektroautos verfügen bereits über die Möglichkeit einer Schnellladung, jedoch lässt sich die Schnellladung vielfach nur an dafür vorgesehenen Ladepunkten nutzen. Insofern findet auf Aufladen im nichtöffentlichen Bereich zumeist an normalen Steckdosen mit Ladeströmen von unter 16 Ampere statt, da das Zeitfenster für den Ladevorgang ausreichend groß ist und zudem Schnellladepunkte in der Anschaffung mit hohen Kosten verbunden sind. Selbst Betriebshöfe zur Beherbergung einer kommerziellen Flotte von Elektroautos weisen oftmals nicht ausreichend dimensionierte Netzanschlusspunkte auf, so dass keine gleichzeitige Schnellladung der Elektroautos möglich ist. Ein alternatives sequentielles Schnellladen durch manuelles Ein- und Umstecken der Elektroautos zum Laden zu verschiedenen Zeiten ist sehr aufwendig.

WO 2015/041366 A1 beschreibt ein Verfahren zur Ladesteuerung einer Mehrzahl Elektrofahrzeuge mit einer computergestützten Ladeleitwarte, welche zur drahtlosen Kommunikation mit den jeweiligen Elektrofahrzeugen ausgestaltet ist.

Ausgehend von dieser Situation ist es eine Aufgabe der Erfindung, ein Verfahren anzugeben, mit dem eine Mehrzahl Elektrofahrzeuge für einen kommerziellen Flotteneinsatz an einem Betriebshof geladen werden können.

Die Lösung der Aufgabe erfolgt durch die Merkmale des unabhängigen Anspruchs. Vorteilhafte Ausgestaltungen sind in den Unteransprüchen angegeben.

Demnach erfolgt die Lösung der Aufgabe durch ein Verfahren zur zentralen Ladesteuerung einer Mehrzahl Elektrofahrzeuge an einem Betriebshof, mit einer computergestützten zentralen Ladeleitwarte, welche zur drahtlosen Kommunikation mit in den jeweiligen Elektrofahrzeugen vorgesehenen Steuerungen ausgestaltet ist, und wobei die Elektrofahrzeuge zum Aufladen einer jeweiligen Batterie gemäß einem Ladeprofil mit einem Ladepunkt des Betriebshofes verbindbar sind, und mit den Schritten:

Prüfen durch die Ladeleitwarte mittels Kommunikation mit den Steuerungen der Elektrofahrzeuge, welchen Ladezustand die jeweilige Batterie aufweist, an welcher Position sich das jeweilige Elektrofahrzeug befindet, und/oder eines Verbindungsstatus des jeweiligen Elektrofahrzeug mit dem Ladepunkt, und übermitteln eines Prüfungsergebnisses an die Ladeleitwarte,

Auswahl, durch die Ladeleitwarte, der bei einer Berechnung von Ladeprofilen zu berücksichtigenden Elektrofahrzeuge anhand einer jeweiligen Einsatzplanung des Elektrofahrzeugs, der Position des jeweiligen Elektrofahrzeugs und/oder des Verbindungsstatus mit dem Ladepunkt,

Berechnen, durch die Ladeleitwarte, des Ladeprofils für jedes sich anhand der Position am Betriebshof befindlichen, mit dem Ladepunkt verbundenen und/oder gemäß der Einsatzplanung zu berücksichtigenden Elektrofahrzeug für einen Betrachtungszeitraum mittels eines linearen Optimierungsalgorithmus unter Berücksichtigung einer an dem Betriebshof verfügbaren elektrischen Ladeleistung, einer geplanten Abfahrzeit gemäß der Einsatzplanung, einer benötigten elektrischen Energiemenge im Hinblick auf eine geplante Route gemäß der Einsatzplanung,

Übermitteln des berechneten Ladeprofils von der Ladeleitwarte an das Elektrofahrzeug, und

Aufladen der Batterie des Elektrofahrzeugs gemäß dem jeweiligen Ladeprofil an dem Ladepunkt.

Ein wesentlicher Punkt der Erfindung ist, dass mittels der Ladeleitwarte eine zentrale Berechnung, Planung und/oder Steuerung von Ladebeginn und Ladeende und der vom Elektrofahrzeugs aufgenommenen elektrischen Ladeenergie in Abhängigkeit von verschiedenen Nebenbedingungen wie beispielsweise der an dem Betriebshof verfügbaren elektrischen Leistung etc. durchgeführt wird. Durch Vorsehen einer zentralen Instanz in Form der Ladeleitwarte, welche die Berechnung der Ladeprofile für eine Vielzahl Betriebshöfe und Elektrofahrzeuge durchführen kann, wird eine Vereinfachung der an dem Betriebshof installierten Ladeinfrastruktur wie Ladepunkt etc. sowie eine Verlagerung des Energieverbrauchs in kostengünstige Niedriglastzeiten erreicht. Die Vereinfachung führt zu einer höheren Zuverlässigkeit und geringeren Kosten der Ladeinfrastruktur bei gleichzeitig geringerer Komplexität. Zudem wird ein Ausfallrisiko auf einzelnen Elektrofahrzeuge reduziert. Im Ergebnis lässt sich durch eine zentrale Berechnung mittels der Ladeleitwarte und Übermittlung der berechneten Ladeprofile eine wesentliche gezieltere Aufladung der Batterien der Elektrofahrzeuge erreichen. Darüber hinaus können mittels der derart geschaffener Kommunikation zwischen den Elektrofahrzeugen und der Ladeleitwarte mögliche Störungen wesentlich frühzeitiger und zuverlässiger erkannt werden. Optional können Daten lokal an der Ladestation installierter intelligenter Stromzähler ("SmartMeter") in die Berechnung einfließen, eine Neuberechnung bei Abweichung gemessener von berechneten Werten anstoßen oder bei einer festgestellten Überlast in Bezug auf die an dem Betriebshof verfügbare elektrische Ladeleistung eine Übersteuerung veranlassen.

Die Elektrofahrzeuge sind bevorzugt als Elektroautos oder Elektrolieferfahrzeuge insbesondere zur Auslieferung von Sendungen, beispielsweise Paketen oder Briefen, ausgestaltet. An dem Betriebshof sind bevorzugt eine Mehrzahl Ladepunkte beispielsweise in Form von Ladesäulen vorgesehen, welche jeweils ein mit dem Elektrofahrzeug verbindbares Ladekabel zum Aufladen der Batterie aufweisen. An dem Elektrofahrzeug ist bevorzugt eine Einrichtung zum Erkennen des ordnungsgemäß mit dem Elektrofahrzeug verbundenen Ladekabels vorgesehen. Optional kann über das Ladekabel eine eindeutige Identifikation der Ladestation bzw. Ladesäule und/oder Zuordnung des Elektroautos zu der Ladestation erfolgen. Das Verfahren lässt sich für einen einzigen Betriebshof verwenden, wobei die zentrale Ladeleitwarte ebenso Ladeprofile für eine Vielzahl Betriebshöfe mit jeweils einer Mehrzahl Elektrofahrzeuge und gegebenenfalls zwischen den Betriebshöfen wechselnden Elektrofahrzeugen berechnen kann. Die Kommunikation mit den Elektrofahrzeugen erfolgt beispielsweise mittels GSM, UMTS, LTE, WLAN oder dergleichen.

Die Steuerung in dem Elektrofahrzeug weist vorzugsweise einen Mikrocontroller oder eine speicherprogrammierbare Steuerung auf, welche das Laden der Batterie anhand des Ladeprofils und die Kommunikation mit der Leitwarte steuert. Mit anderen Worten dient die Steuerung zur Ausführung des Ladeprofils, nicht jedoch zum Erstellen desselben; das Erstellen bzw. Berechnen des Ladeprofils führt nur die Ladeleitwarte durch. Zur Bestimmung der Position des Elektrofahrzeugs weist dieses bevorzugt einen GPS, Beidou, Galileo und/oder Glonass Empfänger auf, welcher in Kommunikationsverbindung mit der Steuerung steht. Ferner kann auch eine Bestimmung der Position mittels Erkennung des Ladepunktes bzw. der Ladesäule erfolgen, an der das Elektrofahrzeug angeschlossen ist. Die Erkennung kann über Kommunikation des Elektrofahrzeugs mit der Ladesäule über eine Ladeprotokoll erfolgen oder über Identifikation mittels eines Schlüsselschalters, Barcode oder RFID. Bei einphasigem Laden lässt sich eine Gleichverteilung der Ladelast über alle Stromphasen sicherstellen, sofern die Phasenbelegung der Ladesäulen in der Leitwarte hinterlegt sind. Die Einsatzplanung kann Informationen wie beispielsweise Abfahrzeit, Länge und/oder Strecke der Route, Zwischenhalte, Ziel-Betriebshof etc. umfassen.

Die Position umfasst bevorzugt eine geographische Information, eine Adresse, eine Information, ob und/oder wo das jeweilige Elektroauto auf dem Betriebshof und/oder an welchem Ladepunkt abgestellt ist, oder dergleichen. Das Ladeprofil umfasst bevorzugt eine zeitliche Abfolge einer während des Betrachtungszeitraums ladbaren Energiemenge. Nach einem Eintreffen des Elektrofahrzeugs auf dem Betriebshof, beispielsweise nach einem Ausliefern der Sendungen um 20:00 Uhr, verbindet bevorzugt ein Bediener bzw. Fahrer des Elektroautos dieses mit dem Ladekabel der Ladesäule. Sofern exemplarisch das Ladeprofil das Aufladen ab 03:00 Uhr hinsichtlich einer geplanten Abfahrtszeit um 08:00 Uhr vorsieht, dann erfolgt das Aufladen der Batterie entsprechend erst ab 03:00 Uhr. Die für die geplante Route benötigte Energiemenge wird entsprechend des Ladeprofils bis 08:00 Uhr vollständig geladen. Zudem kann ein ungeplanter Start des Ladens erfolgen, sofern noch ungenutzte Kapazitäten des Hausanschlusses verfügbar sind. Ein ungeplanter Start kann beispielsweise sinnvoll sein, um günstige Strompreise (z.B. Daten der Strombörse) bei Überschüssen im Energieversorgungsnetz zu nutzen oder die Aufnahme von Stromüberschüssen als Netzdienstleistung anzubieten. Umgekehrt kann auch ein verfrühter Start sinnvoll sein, wenn zu einem späteren Zeitpunkt Engpässe im Energieversorgungsnetz zu erwarten sind (z.B. auf Basis Windprognose). Eine Kommunikation zwischen Ladeleitwarte und einem Stromnetzdienstleistern erfolgt vorteilig über eine Kommunikationsschnittstelle.

Nach einer bevorzugten Weiterbildung umfasst das Verfahren zudem die Schritte: Unterteilen, durch die Ladeleitwarte, des Betrachtungszeitraums in einzelne Zeitschritte mit festgelegten Zeitschrittgrößen, und Berechnen, durch die Ladeleitwarte, mittels des linearen Optimierungsalgorithmus eine in jedem Zeitschritt zu ladende elektrische Leistung als Ladeprofil. Der jeweilige Betrachtungszeitraum wird bevorzugt durch die letzte Abfahrt innerhalb der nächsten 24 Stunden der betrachteten Elektrofahrzeuge festgelegt. Die in jedem Zeitschritt zu ladende elektrische Leistung wird in vorteiliger Weise als Vektor ausgedrückt. Zusätzlich wird für jeden Zeitschritt bevorzugt noch ein Stromkostenvektor mit dem zu erwartenden Strompreis in dem Zeitschritt gebildet. Ziel der Optimierung ist eine möglichst kostenoptimale Verteilung der an dem Betriebshof verfügbaren Ladeleistung auf die an dem Betriebshof verfügbaren Ladepunkte im Hinblick auf die für den Betrachtungszeitraum benötigte Aufladung der Batterien.

Grundsätzlich ist ausreichend, wenn die lineare Optimierung wie zuvor ausgeführt unter Berücksichtigung des Ladezustands der Batterie des jeweiligen Elektrofahrzeugs, der Position, an welcher sich das jeweilige Elektrofahrzeug befindet, und/oder eines Verbindungsstatus des jeweiligen Elektrofahrzeug mit dem Ladepunkt erfolgt. Nach einer besonders vorteiligen Weiterbildung erfolgt die lineare Optimierung unter weiterer Berücksichtigung einer an dem Betriebshof verfügbaren Anzahl von Ladepunkten, einer gegebenenfalls vorhandenen Gruppierung der Ladepunkte, einer gegebenenfalls vorhandenen maximalen elektrischen Ladeleistung des Ladepunktes und/oder der Gruppierung, einer Absicherung der Ladepunkte und/oder der gegebenenfalls vorhandenen Gruppierung, einer Batteriekapazität des Elektrofahrzeugs und/oder einer gewünschten Erhöhung einer Batteriekapazität des Elektrofahrzeugs, eines erwarteten Strompreisverlaufs während des Betrachtungszeitraums und/oder, in Abhängigkeit von einer Außentemperatur an dem Elektrofahrzeug, einer Vorkonditionierung.

Eine Gruppierung von Ladegruppen umfasst bevorzugt eine Mehrzahl Ladepunkte. Beispielsweise kann ein baumartiger Aufbau von Ladegruppen vorgesehen sein, um Unterverteilungen und deren erlaubte Maximalleistung abzubilden. Maximalleistungen pro Baum und/oder Ast lassen sich entsprechend einer Aufteilung einzelner Phasen auf den Baum bzw. den Ast definieren. Eine Vorkonditionierung ist beispielsweise bei tiefen Temperaturen im Winter oder bei hohen Temperaturen im Sommer geboten. Während im Winter der Betrieb einer Heizung notwendig sein kann, ist im Sommer gegebenenfalls der Betrieb einer Klimaanlage oder Lüftung gewünscht. Die Vorkonditionierung stellt sicher, dass die für den Betrieb der Heizung, der Klimaanlage und/oder Lüftung notwendige Energiemenge bei der Berechnung des Ladeprofils und der darauf folgenden Ladung berücksichtigt wird.

Nach einer bevorzugten Weiterbildung umfasst das Verfahren die Schritte: Berechnen, durch die Ladeleitwarte, einer Rückfall-Ladeleistung für einen gegebenenfalls verbleibenden Teil der Elektrofahrzeuge, deren Steuerungen nicht in Kommunikation mit der Ladeleitwarte stehen, in Abhängigkeit von der an dem Betriebshof verfügbaren elektrischen Ladeleistung, und falls keine Kommunikation mit einem Elektrofahrzeug möglich ist, kontinuierliches Laden des Elektrofahrzeugs bis zur geplanten Abfahrtszeit. Um bei einem Kommunikationsverlust in einen sicheren Ladezustand zurück zu fallen und dennoch die Elektrofahrzeuge aufzuladen, wird in vorteiliger Weise die Rückfall-Ladeleistung für jedes Elektrofahrzeug definiert und vorzugsweise in jedem Elektrofahrzeug hinterlegt. Bevorzugt wird für jeden Ladepunkt des Betriebshofes durch die Ladeleitwarte eine individuelle Rückfall-Ladeleistung ermittelt. Die Rückfall-Ladeleistungen der einzelnen Ladepunkte können abhängig von der Gruppenstruktur und Anschlussleistung des Betriebshofes sein. Bevorzugt wird für den gegebenenfalls verbleibenden Teil der Elektrofahrzeuge, deren Steuerungen nicht in Kommunikation mit der Ladeleitwarte stehen, ebenso ein Ladeprofil umfassend die Rückfall-Ladeleistung erstellt.

Damit die an dem Betriebshof insgesamt verfügbare elektrische Leistung nicht überschritten wird, umfasst das Verfahren in vorteiliger Weise den Schritt: Subtrahieren der berechneten Rückfall-Ladeleistung von der an dem Betriebshof verfügbaren elektrischen Ladeleistung und, und Berücksichtigung der verbleibenden an dem Betriebshof verfügbaren elektrischen Ladeleistung, Berechnen des Ladeprofils für den anderen Teil der Elektrofahrzeuge. Weiter bevorzugt umfasst das Verfahren den Schritt: Ausschließen des Teils der Elektrofahrzeuge von dem Berechnen des Ladeprofils, welche gemäß dem vorherigen Prüfens nicht an einer Position auf dem Betriebshof und/oder nicht mit einem Ladepunkt verbunden sind. Derart kann sichergestellt werden, dass die an dem Betriebshof verfügbare elektrische Leistung des Netzanschlusspunkts des Betriebshofs nicht überschritten wird.

Nach einer anderen bevorzugten Weiterbildung umfasst das jeweilige Ladeprofil eine maximal zulässige Ladeleistung an dem jeweiligen Ladepunkt und vorzugsweise eine Rückfall-Ladeleistung, welche die Ladeleistung bei einem Unterbruch der Kommunikation definiert, eine Gültigkeitsdauer und/oder vorzugsweise eine Vorkonditionierungsanfrage umfasst. Noch weiter bevorzugt ist der folgende Schritt vorgesehen: Prüfen, durch die Steuerung, auf Erhalt einer neuen maximal zulässigen Ladeleistung innerhalb der Gültigkeitsdauer und verneinendenfalls Substituieren der jeweiligen maximal zulässigen Ladeleistung durch die Rückfall-Ladeleistung, Aufladen der jeweiligen Batterie mit der Rückfall-Ladeleistung, und im Falle einer Vorkonditionierung, Abbrechen derselben. Um Elektrofahrzeuge, mit denen keine Kommunikation möglich ist und deren Status insofern unbekannt ist, dennoch bei der Ladung zu berücksichtigen, kann angenommen werden, dass sich diese Elektrofahrzeuge an ihrem zugewiesenen Ladepunkt an dem Betriebshof befinden und mit Rückfall-Ladeleistung bzw. mit einer noch gültigen, zuletzt erfolgreich übertragenen Ladeleistung eines vorherigen Ladeprofils geladen werden. Ebenso können Elektrofahrzeuge, die sich zum Zeitpunkt der Optimierung nicht auf dem Betriebshofe befinden oder deren Ladestecker nicht verbunden ist, von der Optimierung ausgeschlossen werden. Auf diese Weise wird eine Überlastung der Ladeinfrastruktur des Betriebshofs vermieden.

In einer bevorzugten Weiterbildung umfasst das Prüfen ein Erfassen der Außentemperatur an dem jeweiligen Elektrofahrzeug und/oder ein Erfassen eines Batteriesteuerung-bezogenen Ladestroms und/oder einer Ladespannung umfasst, der Ladezustand einen Batterie-bezogenen relativen Ladezustand, einen Batteriestrom und/oder eine Batteriespannung umfasst, und/oder das Prüfen auf Verbindung mit dem Ladepunkt ein Erfassen eines Ladepunkt-bezogenen Ladestroms und/oder einer Ladespannung. Bevorzugt weist das Elektroauto ein Batteriemanagementsystem auf, welches zum Messen wenigstens eines Teils der vorgenannten Ströme und Spannungen ausgestaltet ist.

Zum Durchführen der linearen Optimierung existieren grundsätzlich verschiedene Methoden und Verfahren. Nach einer besonders vorteiligen Weiterbildung erfolgt die lineare Optimierung unter Verwendung eines Innere-Punkte-Verfahrens. Das Innere-Punkte-Verfahren zeichnet sich durch eine schnellere Konvergenz bei großen, dünnbesetzte Problemen aus und hat sich experimentell für die Berechnung der Ladeprofile von Elektroautos als besonders effizient und zuverlässig bewiesen.

Nach einer bevorzugten Weiterbildung umfasst die computergestützte zentrale Ladeleitwarte eine Datenbank, in welcher die an dem Betriebshof verfügbare elektrische Ladeleistung, die maximalen elektrischen Ladeleistung des Ladepunktes, die Einsatzplanung mit geplanter Abfahrzeit und Route, der Betrachtungszeitraum und/oder eine Batteriekapazität des Elektrofahrzeugs hinterlegt sind, und mit dem Schritt: Hinterlegen der berechneten Ladeprofile in der Datenbank. Die Datenbank speichert bevorzugt Informationen zur Infrastruktur des Betriebshofes, den verfügbaren Elektrofahrzeugen, deren Zuordnung zu dem Betriebshof sowie deren Einsatzplanung und die berechneten Ladeprofile der einzelnen Elektrofahrzeuge. Bevorzugt weist die Ladeleitwarte ein Webinterface als Konfigurations- und Überwachungsoberfläche auf, um die Elektrofahrzeuge in die Ladeleitwarte aufzunehmen, deren Einsatzplan und Standorte zu konfigurieren. Die Konfiguration ist bevorzugt in der Datenbank abgespeichert.

In einer anderen bevorzugten Weiterbildung umfasst das Verfahren den Schritt: vor Übermitteln des berechneten Ladeprofils, Verifizieren der berechneten Ladeprofile und, bei einem Berechnungsfehler, erneutes Berechnen des Ladeprofils unter Vernachlässigung von Elektrofahrzeugen, welche mit dem vorab berechneten Ladeprofil bis zur geplanten Abfahrzeit die benötigte elektrische Energiemenge nicht aufladen können und/oder Vernachlässigen eine gegebenenfalls vorhandene Vorkonditionierung. Sofern bei der Optimierung ein Berechnungsfehler auftritt, also sich beispielsweise keine gültige Lösung finden lässt, werden Optimierungs-Parameter abgewandelt und die Optimierung erneut durchgeführt. Derart lässt sich ein undefinierter Betriebszustand vermeiden. Optional können Daten eines am Betriebshof installierten intelligenten Stromzählers ("SmartMeter") in die Berechnung und Steuerung einfließen.

Die Lösung der Aufgabe erfolgt zudem durch eine computergestützte zentrale Ladeleitwarte, ausgestaltet zum Durchführen eines zuvor beschriebenen Verfahrens. Weiterbildungen und Vorteile der zentralen Ladeleitwarte ergeben sich für den Fachmann in Analogie zu dem zuvor beschriebenen Verfahren.

Nachfolgend wird die Erfindung unter Bezugnahme auf die anliegenden Zeichnungen im Detail weiter erläutert.

Es zeigen:

Fig. 1 eine Übersicht mit einer zentralen Ladeleitwarte, drei Elektrofahrzeugen und einem Betriebshof zur Ausführung eines Verfahrens nach einem bevorzugten Ausführungsbeispiel der Erfindung in schematischer Ansicht,

Fig. 2 eine Struktur der Ladeleitwarte nach Fig. 1 gemäß dem bevorzugten Ausführungsbeispiel der Erfindung in schematischer Ansicht,

Fig. 3 ein Ladeprofil zum Laden mit voller elektrischer Leistung bei nicht am Betriebshof befindlichen Elektrofahrzeug gemäß einem bevorzugten Ausführungsbeispiel der Erfindung,

Fig. 4 ein Ladeprofil zum Laden zu Zeiten günstigen Stroms gemäß einem bevorzugten Ausführungsbeispiel der Erfindung, und

Fig. 5 ein Ladeprofil zum Laden mit Rückfall-Ladeleistung gemäß einem bevorzugten Ausführungsbeispiel der Erfindung.

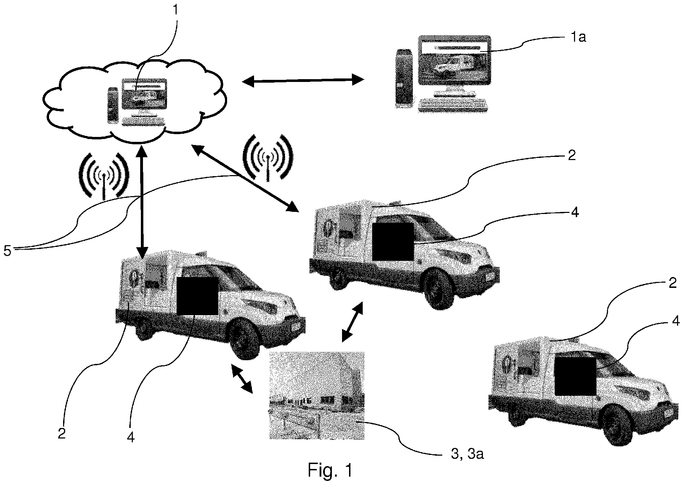

Fig. 1 zeigt eine Übersicht einer zentralen Ladeleitwarte 1, drei Elektrofahrzeugen 2 und einem Betriebshof 3 zur Ausführung eines Verfahrens nach einem bevorzugten Ausführungsbeispiel der Erfindung in schematischer Ansicht.

Die Elektrofahrzeuge 2 sind als Elektroautos vom Typ "StreetScooter B14" ausgeführt und verfügen über Einrichtungen zur Überbringung von Sendungen, wie beispielsweise Paketen oder Briefen, zwischen einem Logistikdienstleister und Empfängern, Paketstationen oder dergleichen auf. Die Elektrofahrzeuge 2 weisen jeweils eine nicht gezeigte Batterie auf, die mit einer vollständigen Aufladung eine Reichweite von bis zu 120 km ermöglicht. In jedem Elektrofahrzeug 2 ist eine Steuerung 4 vorgesehen, welche zur drahtlosen Kommunikation 5 mit der computergestützten zentralen Ladeleitwarte 1 via GSM und WLAN ausgestaltet ist. Die Kommunikation 5 erfolgt internetbasiert mittels verschlüsseltem XMPP-Protokoll und/oder mittels Message Queue Telemetry Transport (MQTT)-Protokoll.

Die Steuerung 4 erhält über einen CAN-Bus des Elektrofahrzeugs 2 Informationen zum Betriebszustand des Elektrofahrzeugs 2, so unter anderem zu einen Ladezustand der Batterie des Elektrofahrzeugs 2 sowie zu Ladeströmen und -Spannungen. Zudem verfügt die Steuerung 4 über einen GPS-Empfänger, der eine aktuelle Position des Elektrofahrzeugs 2 ermittelt. Schließlich ist innerhalb des Elektrofahrzeugs 2 ein Ladegerät zum Laden der Batterie vorgesehen. Eine Ansteuerung des Ladegerätes erfolgt mittels des CAN-Busses. Zum Aufladen einer jeweiligen Batterie sind die Elektrofahrzeuge 2 mit einem Ladepunkt 3a des Betriebshofes 3 mittels eines nicht gezeigten Ladekabels verbindbar. Während die beiden links in Fig. 1 dargestellten Elektrofahrzeuge 2 auf dem Betriebshof 2 abgestellt sind und in Kommunikation 5 mit der zentralen Ladeleitwarte 1 stehen, steht das rechts dargestellte Elektrofahrzeug 2 nicht auf dem Betriebshof 2 und derart nicht in Kommunikation mit der Ladeleitwarte 1.

Entsprechend senden die beiden in Fig. 1 links dargestellten Elektrofahrzeuge 2 Informationen zu ihren aktuellen Zustand und Messwerte an die Ladeleitwarte 1. Nach einem Anschließen der beiden in Fig. 1 links dargestellten Elektrofahrzeuge 2 mittels des Ladekabels an eine Stromquelle in Form einer Ladesäule bzw. Ladestation erhalten die Elektrofahrzeuge 2 von der Ladeleitwarte 1 eine Vorgabe über eine maximale Ladeleistung in Form eines Ladeprofils. Die Vorgabe wird von der Steuerung 4 an ein Batteriemanagementsystem des Elektroautos 2 weitergegeben, welches das Ladegerät zum Aufladen der Batterie des Elektrofahrzeugs 2 gemäß dem Ladeprofil ansteuert.

Das in Fig. 1 rechts dargestellte Elektrofahrzeug kann außerhalb des Betriebshofes 3 geladen werden. Sofern ein Elektrofahrzeug 2 außerhalb des zugewiesenen Standorts an eine Stromquelle angeschlossen wird, erfolgt keine Beschränkung der Ladeleistung. Das Elektrofahrzeug 2 lädt in diesem Fall ungeregelt. Ist die Kommunikation 5 mit der Ladeleitwarte 1 nicht möglich, wird die zuletzt empfangene Vorgabe zum Aufladen verwendet. Ist eine Gültigkeitsdauer dieser Vorgabe überschritten, so wird fahrzeugseitig eine sogenannte Rückfall-Ladeleistung verwendet.

Bei Normalbetrieb prüft die Ladeleitwarte 1 zunächst mittels Kommunikation 5 mit den Steuerungen 4 der Elektrofahrzeuge 2, welchen Ladezustand die jeweilige Batterie aufweist, an welcher Position sich das jeweilige Elektrofahrzeug 2 befindet, und hinsichtlich eines Verbindungsstatus des jeweiligen Elektrofahrzeug 2 mit einem Ladepunkt 3a des Betriebshofes 3, und übermittelt eines Prüfungsergebnis zurück an die Ladeleitwarte 3. Ein Zustand des jeweiligen Elektrofahrzeugs 2 wird durch den aktuellen Ladezustand, auch State of Charge oder abgekürzt SoC genannt, einen Fahrzeugstandort anhand der Position, den Verbindungsstatus des Ladesteckers mit dem Ladepunkt 3a und der Außentemperatur definiert.

Anhand dieser Zustands-Variablen und einer Konfiguration des Standorts entscheidet die Ladeleitwarte 1 in einem zweiten Schritt, ob und wie das Elektrofahrzeug 2 geladen werden und ob eine Vorkonditionierung einer Fahrgastzelle des Elektrofahrzeugs 2 stattfinden soll. Um Fehler zu erkennen, werden der Ladeleitwarte 1 zusätzlich Messwerte der aktuellen Ströme und Spannungen an der Batterie an dem Ladepunkt 3a zur Verfügung gestellt. Das Batteriemanagementsystem liefert die batteriebezogenen Messdaten zu Ladezustand, Batteriestrom und -spannung. Das Ladegerät meldet die netz- und fahrzeugseitigen Ströme und Spannungen. Konkret wird in dem zweiten Schritt durch die Ladeleitwarte 1 eine Auswahl getroffen, welche der Elektrofahrzeuge 2, mit denen eine Kommunikation 5 möglich ist, bei der Berechnung der Ladeprofile zu berücksichtigt sind. Berücksichtigt werden Elektrofahrzeuge 2, die in der Einsatzplanung vorgesehen sind, die hinsichtlich der erkannten Position auf dem Betriebshof 3 stehen und deren Ladestecker mit dem Ladepunkt 3a verbunden sind.

In einem darauffolgenden dritten Schritt berechnet die Ladeleitwarte 1 das Ladeprofil für jedes sich anhand der Position am Betriebshof 3 befindlichen, mit dem Ladepunkt 3a verbundenen und gemäß der Einsatzplanung zu berücksichtigenden Elektrofahrzeug 2 für einen Betrachtungszeitraum von 24 Stunden mittels eines linearen Optimierungsalgorithmus. Als linearer Optimierungsalgorithmus wird das innere Punkte Verfahren verwendet, wobei die Optimierung unter Berücksichtigung einer an dem Betriebshof 3 verfügbaren maximalen elektrischen Ladeleistung, einer geplanten Abfahrzeit gemäß der Einsatzplanung und einer benötigten elektrischen Energiemenge im Hinblick auf eine geplante Route gemäß der Einsatzplanung erfolgt.

Das berechnete Ladeprofil wird von der Ladeleitwarte 1 zeitgesteuert an das jeweilige Elektrofahrzeug 2 übermittelt, wonach dann das Aufladen der jeweiligen Batterie an der Ladepunkt 3a erfolgt. Das Ladeprofil enthält die aktuell maximal zulässige Ladeleistung, die Rückfall-Ladeleistung und eine Gültigkeitsdauer. Erhält das Elektrofahrzeug 2 binnen der Gültigkeitsdauer kein neues Ladeprofil, wird die jeweils maximal zulässige Ladeleistung durch die Rückfall-Ladeleistung substituiert. Wird die Gültigkeitsdauer bei einer Vorkonditionierung überschritten, dann wird eine Vorkonditionierungsanfrage aufgehoben. Die tatsächliche Ladeleistung kann, wenn es die Batteriegrenzen erfordern, die erhaltene Ladeleistung wesentlich unterschreiten.

Von der Ladeleitwarte 1 genutzte und mittels Kommunikation 5 erhaltene Fahrzeugsignale sind wie folgend:

| Signal | Quelle | Ziel | Beschreibung |
|---|---|---|---|
| bChargePlug | BCM | Ladeleitwarte | Ladestecker- Erkennung |
| iACMains | BMS | Ladeleitwarte | Netzstrom |
| iChrgOut | Ladegerät | Ladeleitwarte | Ausgangsstrom Ladegerät |
| iPack | BMS | Ladeleitwarte | Aktueller Batteriestrom |
| Lat | BCM | Ladeleitwarte | Aktuelle Fahrzeugposition (Lat) |
| Lon | BCM | Ladeleitwarte | Aktuelle Fahrzeugposition (Lon) |
| percSoc | BMS | Ladeleitwarte | Ladezustand des Fahrzeuges |
| tAmbient | BCM | Ladeleitwarte | Außentemperatur |
| uACMains | Ladegerät | Ladeleitwarte | Netzspannung |
| uChrgOut | Ladegerät | Ladeleitwarte | Ausgangsspannung Ladegerät |
| uPack | BMS | Ladeleitwarte | Aktuelle Batteriespannung |
| LadeNr | BCM | Ladeleitwarte | Nummer der Ladestation |

BCM steht für Body Control Module und steuert Funktionen des Elektrofahrzeugs 2, wie beispielsweise eine Heizung, misst die Außentemperatur etc. BMS steht für Batteriemanagementsystem. Die vorgenannten Signale werden für eine Erkennung ladebereiter Elektrofahrzeuge 2 und deren Energiebedarf benötigt, umfassend Ladestecker-Erkennung, Ladezustand und Position des Elektrofahrzeugs 2, für eine Fehlererkennung während des Ladevorgangs umfassend Ströme (Ladegerät und Batterie) sowie Spannungen (Ladegerät und Batterie), und für eine Ermittlung, ob eine Vorkonditionierung der Fahrgastzelle notwendig ist, umfassend die Außentemperatur.

Das Elektrofahrzeug erhält von der Ladeleitwarte 1 ein Datenpaket mit folgenden Signalen:

| Signal | Quelle | Ziel | Beschreibung |
|---|---|---|---|
| maxACPower | Ladeleitwarte | Steuerung | Maximale Leistung für Laden und Vorkonditionieren |
| defaultACPower | Ladeleitwarte | Steuerung | Maximale Leistung bei unterbrochener Verbindung |
| bRemoteHeatingCab- | Ladeleitwarte | Steuerung | Vorkonditionierung anfordern |
| uDuration | Ladeleitwarte | Steuerung | Gültigkeitsdauer des Datenpakets |

Die maximalen Ladeleistungen werden mit maxACPower und defaultACPower vorgegeben. Mittels bRemoteHeatingCabin wird die Vorkonditionierung der Fahrgastzelle des Elektrofahrzeugs 2 angefordert, beispielsweise Beheizung oder Enteisung. Der Wert defaultACPower wird als Rückfall-Ladeleistung verwendet, um bei einem Kommunikationsverlust in einen sicheren Ladezustand zurück zu fallen und dennoch die Elektroahrzeuge 2 aufzuladen. Die Rückfall-Ladeleistung wird von der Ladeleitwarte 1 aus der Konfiguration des Standorts berechnet. Mit uDuration wird zusätzlich die Gültigkeitsdauer einer Vorgabe übertragen. Wird keine neue Vorgabe binnen der Gültigkeitsdauer erhalten, so wird nach dem Ablauf der Gültigkeitsdauer zur zuletzt erhaltenen Rückfall-Ladeleistung übergegangen und eine eventuell laufende Vorkonditionierung abgebrochen.

Die Ladeleitwarte 1 führt die Planung der Ladevorgänge durch, erfasst die Fahrzeugdaten und entwickelt, basierend auf den erhaltenen Messwerten, eine standortbasierte Ladestrategie für den jeweiligen Betriebshof 3 als Ladeprofil für die Elektrofahrzeuge 2 des Betriebshofes. Zudem plant die Ladeleitwarte 3 eine mögliche Vorkonditionierung der Fahrgastzellen der Elektrofahrzeuge 2.

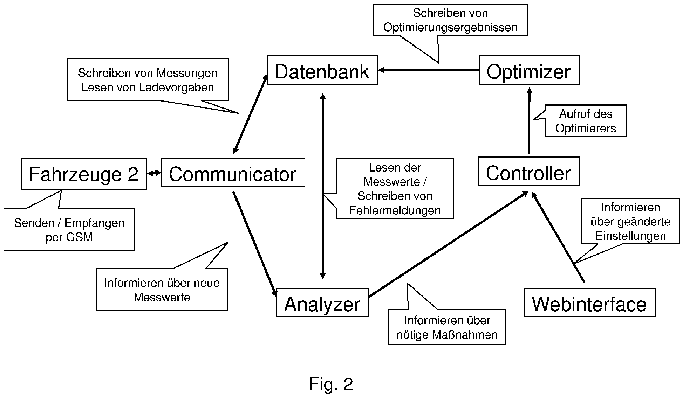

Eine Struktur der Ladeleitwarte 1, die sich in mehrere Module einteilen lässt, ist ein Fig. 2 gezeigt. Eine Datenbank speichert Informationen zur Infrastruktur des Betriebshofs 3, den zugehörigen Elektrofahrzeugen 2 und deren Einsatzplanung sowie die ermittelten Ladeverläufe der einzelnen Elektrofahrzeuge 2. Ein Webinterface 1a stellt eine Konfigurations- und Überwachungsoberfläche für Bediener zur Verfügung. In dem Webinterface 1a können die Elektrofahrzeuge 2 in die Ladeleitwarte 1 aufgenommen und deren Einsatzplan und Standort konfiguriert werden. Die Konfiguration wird in der Datenbank abgespeichert und ein Controller informiert, falls wichtige Änderungen vorgenommen wurden.

Ein Communicator-Modul erhält die Fahrzeugdaten via Kommunikation 5 mit den Elektrofahrzeugen 2, schreibt die Fahrzeugdaten in die Datenbank und informiert ein Analyzer-Modul über den Eingang der neuen Daten. Zusätzlich sendet das Communicator-Modul die aktuell in der Datenbank geplante Ladeleistung an das betreffende Elektrofahrzeug 2. Das Analyzer-Modul wertet neu eingetroffene Fahrzeugdaten aus und entscheidet anhand dieser, welche Maßnahmen durchgeführt werden sollen. Der Controller setzt die ermittelten Maßnahmen dann um. Zusätzlich leitet der Controller eine Optimierung des betroffenen Standortes ein, wenn im Webinterface 1a relevante Änderungen vorgenommen wurden. Der Optimierer sammelt die Elektrofahrzeug- und Standortdaten des zu optimierenden Standortes bzw. des Betriebshofes 2 aus der Datenbank und entwickelt daraus ein lineares Optimierungsproblem. Die Lösung dieses Problems wird nachbearbeitet und in der Datenbank gespeichert.

Konkret dient das Webinterface 1a dient dem Bediener als Konfigurations-, Monitoring- und Planungstool. Der Bediener kann dort den Standort seiner Fahrzeugflotte und dessen Elektrofahrzeuge 2 konfigurieren, den Einsatz dieser Elektrofahrzeuge 2 planen und einen aktuellen Fahrzeugzustand einsehen. Erwartete Eingaben für einen Standort sind Bezeichnung des Standorts, Adresse des Standorts, Koordinaten des Standorts, Ladeinfrastruktur (Ladepunkte 3a, Absicherungen), und/oder Strompreisverlauf (optional). Die Konfiguration der Ladeinfrastruktur erfolgt durch sogenannte Ladegruppen. Diese haben jeweils eine Obergruppe und eine Liste von an diese Ladegruppe angeschlossenen Ladepunkten 3a.

Ausgehend von der obersten Ladegruppe, die den Netzanschlusspunkt des Standorts bzw. des Betriebshofes repräsentiert, kann die Ladeinfrastruktur baumartig aus Ladegruppen aufgebaut werden, um Unterverteilungen und deren erlaubte Maximalleistung abzubilden. Kann nicht von einer symmetrischen Last über drei Phasen ausgegangen werden, da es beispielsweise Elektrofahrzeuge 2 gibt, die einphasig geladen werden, muss jede Phase separat abgebildet werden. Die Maximalleistungen müssen dann entsprechend der einzelnen Phasen aufgeteilt werden. Da aus dieser so erzeugten Struktur Nebenbedingungen für die Optimierung erstellt werden, muss die Abbildung möglichst exakt erfolgen.

Zudem können im Webinterface 1a für die Elektrofahrzeuge 2, die in die Optimierung aufgenommen werden sollen, Profile erstellt werden. Innerhalb dieser Profile wird festgelegt, an welchem Standort bzw. Betriebshof 3 das Elektrofahrzeug 2 stationiert ist und welche Kapazität die Batterie des Elektrofahrzeugs 2 hat. Für jeden Standort bzw. Betriebshof 3 können Routen als Einsatzplanung erstellt werden. Innerhalb einer Route kann pro Tag ein Elektrofahrzeug 2 und der benötigte Ladezustand für die Route angegeben werden. Die Elektrofahrzeug 2 des Standorts werden dann im Optimierungsvorgang derart geplant, dass der benötigte Ladezustand zur nächsten geplanten Abfahrtszeit erreicht ist. Die automatische Vorkonditionierung wird anhand der eingestellten Abfahrtszeit durchgeführt.

Um im Falle eines Kommunikationsverlustes eine Betriebssicherheit des Elektrofahrzeugs 2 zu gewährleisten und die Elektrofahrzeugs 2 dennoch aufzuladen, wird für jeden Ladepunkt 3a bzw. Ladesäule eines Standortes die individuelle Rückfall-Ladeleistung ermittelt. Die Rückfall-Ladeleistung gibt an, mit welcher Leistung das Elektrofahrzeug 2 an diesem Ladepunkt 3a im Falle des Kommunikationsverlustes geladen werden darf. Aufgrund der stark steigenden Komplexität einer manuellen Zuteilung der Rückfall- Ladeleistung wird eine automatische Verteilung der Rückfall-Ladeleistung vorgenommen. Die zugewiesenen Rückfall-Ladeleistungen der einzelnen Ladepunkte 3a sind abhängig von der Gruppenstruktur und Anschlussleistung des Standorts. Die Ladeleistung wird gleichmäßig auf alle Elektrofahrzeuge 2 aufgeteilt.

Die Rückfall-Ladeleistung wird zusätzlich zur normalen Leistungsvorgabe als Teil des Ladeprofils an das Elektroauto 2 gesendet. Um eine Rückwärtskompatibilität nicht zu beeinträchtigen, ist die Rückfall-Ladeleistung in der Steuerung 4 im Auslieferungszustand des Elektrofahrzeugs 2 auf die maximale Ladeleistung des Ladegerätes gesetzt. Die Rückfall-Ladeleistung ist zudem kompatibel mit allen betrachteten Betriebshöfen 2, so dass keine Überlastung des Energieversorgungsnetzes auftreten kann. Es ist daher wichtig, dass alle Elektrofahrzeuge 2 des Betriebshofes 3 mindestens einmalig eine zur aktuellen Standortkonfiguration zugehörige Leistungsvorgabe erhalten, beispielsweise bei erstmaliger Netzeinwahl, damit eine Überlastung der Infrastruktur ausgeschlossen ist. Werden für die Ladestrategie relevante Änderungen im Webinterface 1a durchgeführt, so wird der Controller darüber informiert. Dieser startet dann automatisch eine Optimierung des betreffenden Standorts.

Das Analyzer-Modul analysiert die eingehenden Fahrzeugdaten. In Abhängigkeit der Fahrzeugdaten und den geplanten Leistungsverläufen kann es Neuoptimierungen auslösen oder Fehler von Elektrofahrzeugen 2 oder der Infrastruktur erkennen. Gründe für eine Neuoptimierung umfassen beispielsweise: Ein Elektrofahrzeug 2 wurde ein- oder ausgesteckt, die Kommunikation zu einem Elektrofahrzeug 2 wurde unterbrochen oder wieder hergestellt, die Außentemperatur hat sich so stark geändert, dass eine Vorkonditionierung nötig wird oder nicht mehr benötigt wird, und/oder ein Elektrofahrzeug 2 weicht signifikant von den Ladevorgaben ab

Anhand der eingehenden Messwerte lassen sich mögliche Fehler erkennen, über die der Bediener im Webinterface 1a informiert werden kann. Wird beispielsweise ein Elektrofahrzeug 2 trotz vorhandener Netzspannung und einer von null verschiedenen Ladevorgabe nicht geladen, so liegt gegebenenfalls ein Kontaktproblem oder ein Defekt des Ladegeräts vor. Über die Spannungsmessung der Ladegeräte lassen sich auch Spannungseinbrüche an den Ladepunkten 3a erfassen. Mögliche Fehler, die auftreten können, sind nachfolgend aufgeführt:

| Messwerte/Beobachtung | Vorgabe/Erwartung | Fehler | Mögliche Ursachen |
|---|---|---|---|
| bChargePlug = 1 uACMains = 0 | - | Keine Netzspannung | Kontaktproblem Netzsicherung ausgelöst |
| bChargePlug = 1 uACMains > 0 iPack = 0 | maxACPower > 0 | Fahrzeug lädt nicht | Kontaktproblem Ladegerät defekt |
| bChargePlug = 1 uACMains < 207 V | - | Unterspannung | Überlastung der Infrastruktur Falsche Konfiguration des Standorts |
| SoC bei Abfahrt < Ziel-SoC | Ziel-SoC | Geplanter Ladezustand nicht erreicht | Konfigurationsbedingt (z.B. Abfahrt kurzfristig vorverlegt; erlaubte Ladeleistung zu gering) Fehlerbedingt (z. B. zeitweiliger Stromausfall) |
| Ladeleistung stark von Ladegeräteleistung verschieden | Ladeleistung entspricht etwa Ladegeräteleist ung | Starke Abweichung der Messwerte | Fehlerhafte Kalibrierung der Stromsensoren oder Sensordefekt Starker Nebenverbraucher aktiv (Fahrzeugheizung) |

(fortgesetzt)

| Messwerte/Beobachtung | Vorgabe/Erwartung | Fehler | Mögliche Ursachen |
|---|---|---|---|
| Ladeleistung > Absicherung des Ladepunkts 3a | Ladeleistung < Absicherung | Überlastung der Infra - struktur | Fehlerhafte Konfiguration (Absicherung zu groß ausgewählt) Bedienungsfehler (falscher Ladepunkt verwendet) |
| Extreme Temperaturwerte | Gemäßigte Temperaturen | Ungültige Temperaturmessung | Temperatursensor defekt oder falsch kalibriert |

Der Optimierer ermittelt für die Elektrofahrzeuge 2 wenigstens eines Betriebshofes 3 ein kostenoptimales Ladeprofil. Dazu verwendet der Optimierer die im Webinterface 1a gemachten Angaben zum Standort und den aktuellen Zustand der Elektrofahrzeuge 2 des Standorts bzw. des Betriebshofes 3.

Um eine Berechnungszeit zur Berechnung der Ladeprofile gering zu halten, hat sich ein linearer Ansatz als besonders vorteilig erwiesen. Für die Berechnung werden die Annahmen getroffen, dass die Ladeleistung vom Ladezustand des Elektrofahrzeuges 2 unabhängig ist und dass keine Stromverluste entstehen. Zur linearen Optimierung wird das Innere-Punkte-Verfahren verwendet, welches sich durch bessere Konvergenz-Eigenschaften und eine für diese Anwendung geeignetere Lösungsstruktur auszeichnet.

Die lineare Optimierung umfasst mehrere Schritte. Zunächst wird der Standort bzw. der Betriebshof 3 und dessen Ladeinfrastruktur in der Ladeleitwarte 1 erfasst. Daraufhin wird der Einsatzplan definiert, welcher geforderte Ladezustände und Abfahrtszeiten der Elektrofahrzeuge 2 umfasst. Wird nun die Optimierung beispielsweise durch ein zum Laden eingestecktes Elektrofahrzeug 2 angestoßen, so wird zunächst der Zustand der Elektrofahrzeuge 2 des Standorts ausgewertet. Anhand aktueller Fahrzeugzustände und der Struktur des Standortes wird dann anhand verschiedener Kriterien bestimmt, welche der Elektrofahrzeuge 2 bei der Optimierung zu berücksichtigen sind. Anhand der Vorgaben durch die Ladeinfrastruktur, Einsatzplanung und des Fahrzeugzustandes werden Nebenbedingungen an die Optimierung entwickelt und die lineare Optimierung durchgeführt. Die ermittelten Ladeprofile werden dann an die jeweiligen Elektrofahrzeuge 2 über GSM, LTE, UMTS, WLAN oder dergleichen verteilt.

Zunächst wird für den Standort bzw. den Betriebshof 3, für den eine Optimierung angestoßen wurde, die im Webinterface 1a vorgenommene Konfiguration ausgelesen. Diese Daten beinhalten im Wesentlichen die Abbildung der Ladeinfrastruktur des Standorts und deren Maximalleistungen. Die Standortdaten werden mit den Fahrzeugdaten und der Einsatzplanung zusammengeführt. Hierbei werden diejenigen Elektrofahrzeuge 2 identifiziert, denen ein Ladepunkt 4a zugewiesen ist und für die im Betrachtungszeitraum ein Einsatz festgelegt wurde. Anhand der Fahrzeugdaten werden die Elektrofahrzeuge 2 selektiert, die in der Optimierung berücksichtigt werden müssen. Die Selektion der Fahrzeuge erfolgt basierend auf Position, Kommunikationszustand, Zustand des Ladesteckers und Einsatzplanung.

Anhand der Positionsdaten werden jene Elektrofahrzeuge 2 ausgewählt, welche sich am Standort befinden und mit der Ladeinfrastruktur verbunden und ladebereit sind. Eine gesonderte Behandlung erfahren jene Elektrofahrzeuge 2, deren Status unbekannt ist. Dies sind Elektrofahrzeuge 2 mit denen derzeit keine Kommunikation 5 möglich ist. Es wird daher angenommen, dass sich diese Elektrofahrzeuge 2 an ihrem zugewiesenen Ladepunkt 3a befinden und mit Rückfall- Ladeleistung bzw. mit der noch gültigen, zuletzt erfolgreich übertragenen Ladeleistung geladen werden. Auf diese Weise wird eine Überlastung der Ladeinfrastruktur vermieden; möglicherweise wird aber Ladeleistung für Elektrofahrzeuge 2 reserviert, welche nicht mit der Ladeinfrastruktur verbunden sind. Elektrofahrzeuge 2, die sich zum Zeitpunkt der Optimierung nicht am Standort befinden oder deren Ladestecker nicht verbunden ist, werden von der Optimierung ausgeschlossen.

Die lineare Optimierung unterliegt verschiedenen Randbedingungen. Das Ergebnis der Optimierung ist eine dem vorgegebenen Strompreis angepasste Ladestrategie umfassend ein Ladeprofil für jedes Elektrofahrzeug 2, welche eine Überlastung der Netzinfrastruktur vermeidet und gleichzeitig sicherstellt, dass alle für den Einsatz eingeplanten Elektrofahrzeug 2 pünktlich zur erwarteten Abfahrtszeit bis zum gewünschten Ladezustand geladen werden. In den Randbedingungen werden die Kriterien Abfahrtszeit, benötigte Energiemenge, Leistungsgrenzen, Ladepunktabsicherungen, Gruppenabsicherungen und Netzanschlussleistung berücksichtigt.

Zunächst wird der Betrachtungszeitraum in einzelne Zeitschritte mit einer festgelegten Zeitschrittgröße unterteilt. Je nach Größe des Betrachtungszeitraums ergibt sich eine unterschiedliche Anzahl an Zeitschritten $n_{slots}$. Der jeweilige Betrachtungszeitraum wird durch die letzte Abfahrt binnen der nächsten 24 Stunden der betrachteten Elektrofahrzeuge 2 festgelegt. Die Anzahl der Zeitschritte ergibt sich zu:

$$n_{slots} = dt_{dep}/dt_{slot}, \text{ mit } dt_{dep} \triangleq \text{Betrachtungszeitraum und } dt_{slot} \triangleq \text{Zeitschrittgröße}$$

Ziel der Optimierung ist die kostenoptimale Verteilung der verfügbaren Ladeleistung auf die verfügbaren Ladepunkte 3a. Zeiten günstiger Strompreisen müssen also möglichst effizient genutzt werden. Mathematisch lässt sich dies wie folgt ausdrücken:

$$\min_{\mathrm{x}} c^T x, \; mit \; c \triangleq \text{Stromkostenvektor und } x \triangleq \text{Ladeleistungsvektor}$$

Der Ladeleistungsvektor enthält nach der Optimierung die Ladeleistungen für die einzelnen Ladepunkte für jeden einzelnen Zeitschritt. Er hat daher $n_x = n_{slots} \cdot n_{vehicles}$ Elemente. Der Stromkostenvektor enthält die Stromkosten in den einzelnen Zeitschritten. Da diese für jeden Ladepunkt 3a gleich sind, wird der Stromkostenvektor periodisch für jeden Ladepunkt 3a wiederholt. Die Randbedingungen der Optimierung ergeben sich aus der Konfiguration des Standortes, der Einsatzplanung und dem aktuellen Fahrzeugstatus.

Als Grundlage für die Leistungsgrenzen wird die im Webinterface 1a angelegte Infrastruktur verwendet. Ladegruppen setzen sich immer aus den dieser Gruppe zugehörigen Ladepunkten 3a und einer maximalen Gruppenleistung zusammen. Ladepunktabsicherung und Ladegeräteleistung können als Ladegruppen mit nur einem Ladepunkt 3a und die Netzabsicherung als eine Gruppe mit allen Ladepunkten 3a des Standortes erfasst werden.

Die aus diesen Vorgaben ableitbaren Nebenbedingungen sind derart aufgebaut, dass für jeden Zeitschritt die Summe der an allen den Ladepunkten 3a abgegriffenen Fahrzeugleistungen die erlaubte Gruppenleistung nicht überschreitet:

$$P_{\mathrm{group}}(i) \geq \Sigma_{\;vehiclesgroup} \; P_{vehicle}(i), \; mit \; i \triangleq \text{betrachteter Zeitschritt}$$

Die Anzahl der Nebenbedingungen, die aus einer Ladegruppe resultiert, entspricht somit der Anzahl an Zeitschritten.

Da nicht alle Elektrofahrzeuge 2 zum gleichen Zeitpunkt den Standort verlassen, muss sichergestellt werden, dass Elektrofahrzeuge 2 mit früheren Abfahrtszeiten zu diesem Zeitpunkt bereits den geforderten Ladezustand erreicht haben. Als Nebenbedingung lässt sich dies so formulieren, dass die erlaubte Ladeleistung in den Zeitschritten, welche nach der Abfahrtszeit des Elektrofahrzeugs 2 liegen, auf null reduziert wird:

$$P_{charge}(i \geq i_{dep}) = 0 \; mit \; i_{dep} \triangleq \text{Abfahrtsslot}$$

Die benötigte Energiemenge ergibt sich aus der Ladezustandsdifferenz zwischen dem geforderten und dem aktuellen Ladezustand und der Batteriekapazität des Elektrofahrzeugs 2:

$$dE_{req} = (SoC_{req} - SoC_{veh}) \cdot C_{bat}$$

Um diese Differenz auszugleichen, muss das Integral über die Ladeleistung der benötigten Energiemenge entsprechen. Da die Berechnung in diskreten Zeitschritten erfolgt, reduziert sich das Integral zu einer Summe:

$$dE_{opt} = \int P_{charge}(t) \, dt = \Sigma_{\;i} \, P(i) \cdot di_{slot}, \; mit \; di_{slot} \triangleq \text{Zeitschrittgröße}$$

Als lineare Randbedingung ergibt sich folglich:

$$dE_{opt} - dE_{req} \geq 0$$

Die Vorkonditionierung wird in Abhängigkeit der Umgebungstemperatur in der Optimierung eingeplant. Soll eine Vorkonditionierung durchgeführt werden, so wird für die im Webinterface 1a eingestellte Dauer $dt_{preconDuration}$ vor der geplanten Abfahrtszeit die Vorkonditionierung aktiviert. Der Leistungsbedarf beträgt hierfür, vorgegeben durch die verwendete Fahrzeugheizung, exemplarisch 900 W. Diese Energie wird hauptsächlich einem Hochspannungskreis des Elektrofahrzeugs 2 entzogen. Während der Vorkonditionierung wird die nötige Leistung vom Ladegerät ausgeglichen, damit die Batterie nicht entladen wird. Die Leistung des Ladegerätes muss in diesen Zeitschritten daher mindestens 900 W betragen. Die entsprechende Nebenbedingung zur Reservierung der benötigten Leistung zur Vorkonditionierung lässt sich analog zu den Abfahrtszeiten formulieren:

$$P_{charge}(i \geq i_{dep} - \text{dt}_{\text{preconDuration}}) \geq 900\ W,\ \text{mit}\ i_{dep} \triangleq \text{Abfahrtsslot}$$

Da die 900 W für die Vorkonditionierung ebenfalls durch das Ladegerät erbracht wird, muss, falls eine Vorkonditionierung eingeplant wird, die benötigte Energiemenge um die für die Vorkonditionierung benötigte Energie erhöht werden:

$$E_{\text{req,vk}} = E_{\text{req}} + 900\ W \cdot 30\ min\ /\ C_{bat}$$

Die Anzahl der Nebenbedingungen für die lineare Optimierung ergibt sich aus der Anzahl der Fahrzeuge $n_{veh}$, der Zeitschritte $n_{timeslots}$ und der Ladegruppen $n_{groups}$ zu:

$$n_{NB} = n_{veh} \cdot (n_{slots} + n_{groups} + \{\ 4,\ \text{ohne Vorkonditionierung, oder}\ 5,\ \text{mit Vorkonditionierung}\}$$

Die Anzahl der Nebenbedingungen ist insbesondere von der Anzahl von Zeitschritten, Elektrofahrzeugen 2 und Ladegruppen abhängt.
Der Optimierung verfolgt folgenden Ablauf:

1. Lösen der Optimierung mittels Innere-Punkte Methode
2. Verifikation des Ergebnisses
3. Erneute Optimierung bei Fehlern mit relaxierten Randbedingungen

    a. Vernachlässigung der Vorkonditionierung
    b. Vernachlässigung von Elektrofahrzeugen, die den Soll-SoC nicht erreichen können

4. Bei keiner gültigen Lösung: Rückfall-Ladeleistung für alle Elektrofahrzeuge 2 verwenden
5. Ladeprofile in der Datenbank ablegen

Die lineare Optimierung wird zunächst mit den vorab diskutierten Nebenbedingungen durchgeführt. Sollte sich keine gültige Lösung finden lassen, werden die Nebenbedingungen abgewandelt. Zunächst wird von einer Vorkonditionierung abgesehen. Führt dies zu keiner gültigen Lösung, so werden für Elektrofahrzeuge 2, die ihr Ladeziel nicht bis zur eingestellten Abfahrtszeit erfüllen können, vernachlässigt. Gelingt dies nicht, wird für alle Elektrofahrzeuge 2 die Rückfall-Ladeleistung angenommen, um einen undefinierten Betriebszustand zu vermeiden.
Bei der Optimierung kann es vorkommen, dass sich für die derzeitige Fahrzeug- und Standortskonfiguration keine gültige Lösung finden lässt. Die Ursachen dafür sind vielfältig und umfassen unter anderem eine mögliche fehlerhafte Konfiguration, beispielsweise eine Leistungsgrenze fälschlicherweise auf 0 kW eingestellt oder Einsatzplanung kurzfristig vor geplanter Abfahrtszeit geändert (z.B. Fahrzeugwechsel), die Standortskapazität ist ausgereizt, beispielsweise zu viele Elektrofahrzeuge 2 für die vorhandene Infrastruktur eingesetzt oder Stand- bzw. Ladezeit der Elektrofahrzeuge 2 ist zu gering, um die Ladeanforderungen zu erfüllen, es liegt ein Defekt vor, beispielsweise Ladeinfrastruktur defekt oder derzeit abgeschaltet oder Fahrzeugdefekt (z.B. Aufgrund defektem Ladegerät keine Ladung möglich), die zur Vorkonditionierung benötigte Leistung verhindert das vollständige Laden der Elektrofahrzeuge 2, ein Elektrofahrzeug 2 wurde zu spät mit der Ladeinfrastruktur verbunden und kann selbst bei maximaler Ladeleistung den geforderten Ladezustand nicht erreichen, oder es wurde Ladeleistung für Elektrofahrzeuge 2, zu denen keine Kommunikation 5 stattfinden kann, reserviert (obwohl diese Elektrofahrzeuge 2 unter Umständen nicht angeschlossen sind), so dass die verbleibende Ladeleistung nicht ausreicht, um die Ladeziele der restlichen Elektrofahrzeuge 2 zu erreichen.
Während auf eine fehlerhafte Konfiguration oder mechanische Defekte kein Einfluss ausübar ist, kann beispielsweise auf eine Vorkonditionierung für jene Elektrofahrzeuge 2 verzichtet werden, welche den geforderten SoC mit eingeplanter Optimierung nicht erreichen können. Ist diese Maßnahme nicht erfolgreich, so werden zunächst alle Elektrofahrzeuge 2, deren Ladeziele in der verbleibenden Zeit bis zur Abfahrt nicht erreicht werden können, bis zur Abfahrt so weit wie möglich geladen. Kann weiterhin keine gültige Lösung für das Optimierung gefunden werden, kann von der Ladung von Elektrofahrzeugen 2, welche ihr Ladeziel ohnehin nicht erreichen, abgesehen werden und die freigewordene Leistung für andere Elektrofahrzeugen 2 eingeplant werden.

Ist es trotz dieser Maßnahmen nicht möglich, eine gültige Ladestrategie zu ermitteln, so wird davon ausgegangen, dass entweder ein Konfigurationsproblem oder ein Defekt vorliegt. Um dennoch einen sicheren Betriebszustand einzuhalten, werden die Ladeleistungen aller Elektrofahrzeugen 2 des Standorts auf die Rückfall-Ladeleistung begrenzt und keine Vorkonditionierung eingeplant. Die Elektrofahrzeugen 2 können somit an den zugewiesenen Ladepunkten 3a weiterhin mit Rückfall-Ladeleistung geladen werden. Bedingt durch die Auslegung der Rückfall-Ladeleistung wird, wenn die Konfiguration des Standorts korrekt durchgeführt wurde und die Fahrzeuge an den zugewiesenen Ladepunkten eingesteckt sind, eine Überlastung verhindert.

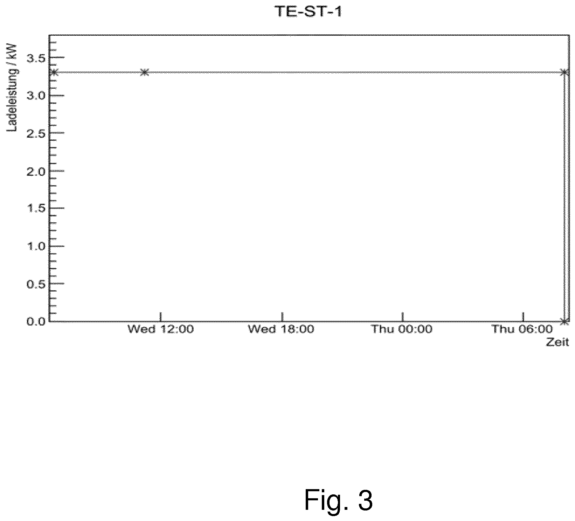

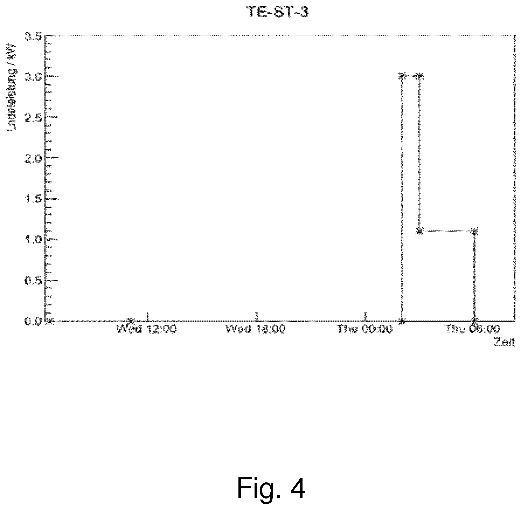

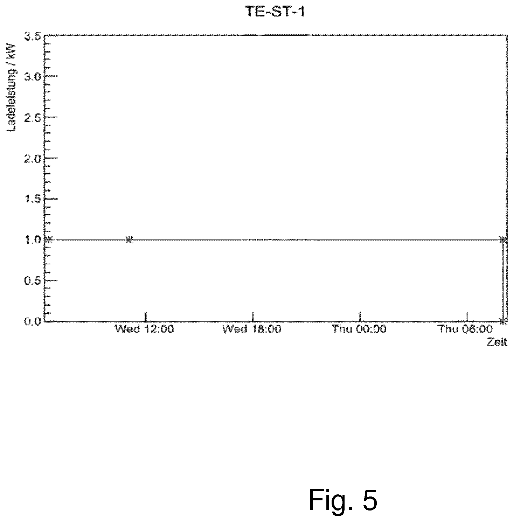

Fig. 3 zeigt ein Ladeprofil aufgetragen als Ladeleistung in kW über die Zeit bis zu einer Abfahrtszeit von 8 Uhr morgens für ein nicht am Standort bzw. nicht am Betriebshof 1 befindliches Elektrofahrzeug, welches entsprechend mit voller elektrischer Leistung geladen wird. Fig. 4 zeigt ein Ladeprofil für ein "spätes" Laden kurz vor der Abfahrtszeit, wodurch einerseits eine Schonung der Batterie erreicht sowie andererseits ein niedriger Strompreis nutzbar ist. Wie aus der Figur ersichtlich, wird zunächst mit einer Leistung von 3kW bei niedrigem Strompreis geladen. Die Leistung wird dann etwa 1,1kW zum Schonen der Batterie verringert, so dass zum Abfahrtszeitpunkt um 6 Uhr die Batterie hinsichtlich der geplanten Route zu 40% geladen ist. Fig. 5 zeigt schließlich ein Ladeprofil zum Laden mit Rückfall-Ladeleistung.

Bezugszeichenliste

| Ladeleitwarte | 1 |
|---|---|
| Webinterface | 1a |
| Elektrofahrzeug | 2 |
| Betriebshof | 3 |
| Ladepunkt | 3a |
| Steuerung | 4 |
| Kommunikation | 5 |

**Patentansprüche**

1. Verfahren zur zentralen Ladesteuerung einer Mehrzahl Elektrofahrzeuge (2) insbesondere an einem Betriebshof (3), mit einer computergestützten zentralen Ladeleitwarte (1), welche zur drahtlosen Kommunikation (5) mit in den jeweiligen Elektrofahrzeugen (2) vorgesehenen Steuerungen (4) ausgestaltet ist, und wobei die Elektrofahrzeuge (2) zum Aufladen einer jeweiligen Batterie gemäß einem Ladeprofil umfassend wenigstens eine zeitliche Abfolge einer während eines Betrachtungszeitraums ladbaren Energiemenge mit einem Ladepunkt (3a) des Betriebshofes (3) verbindbar sind, aufweisend die Schritte:

   Prüfen, durch die Ladeleitwarte (1) mittels Kommunikation (5) mit den Steuerungen (4) der Elektrofahrzeuge (2), welchen Ladezustand die jeweilige Batterie aufweist, an welcher Position sich das jeweilige Elektrofahrzeug (2) befindet, und/oder eines Verbindungsstatus des jeweiligen Elektrofahrzeug (2) mit dem Ladepunkt (3a), und übermitteln eines Prüfungsergebnisses an die Ladeleitwarte (1),
   Auswahl, durch die Ladeleitwarte (1), der bei einer Berechnung von Ladeprofilen zu berücksichtigenden Elektrofahrzeuge (2) anhand einer jeweiligen Einsatzplanung des Elektrofahrzeugs (2), der Position des jeweiligen Elektrofahrzeugs (2) und/oder des Verbindungsstatus mit dem Ladepunkt (3a),
   Berechnen, durch die Ladeleitwarte (1), des Ladeprofils für jedes sich anhand der Position am Betriebshof (3) befindlichen, mit dem Ladepunkt (3a) verbundenen und/oder gemäß der Einsatzplanung zu berücksichtigenden Elektrofahrzeuge (2) für einen Betrachtungszeitraum mittels eines linearen Optimierungsalgorithmus unter Berücksichtigung einer an dem Betriebshof (3) verfügbaren elektrischen Ladeleistung, einer geplanten Abfahrtszeit gemäß der Einsatzplanung und einer benötigten elektrischen Energiemenge im Hinblick auf eine geplante Route gemäß der Einsatzplanung, Übermitteln des berechneten Ladeprofils von der Ladeleitwarte (1) an das Elektrofahrzeug (2), und Aufladen der Batterie des Elektrofahrzeugs (2) gemäß des jeweiligen Ladeprofils an dem Ladepunkt (3),
   **gekennzeichnet durch** den Schritt vor dem Übermitteln des berechneten Ladeprofils, Verifizieren der berechneten Ladeprofils und, bei einem Berechnungsfehler, erneutes Berechnen des Ladeprofils unter Vernachlässigung von Elektrofahrzeugen (2), welche mit dem vorab berechneten Ladeprofil bis zur geplanten Abfahrtszeit die benötigte elektrische Energiemenge nicht aufladen können,

2. Verfahren nach dem vorhergehenden Anspruch, aufweisend die Schritte:

Unterteilen, durch die Ladeleitwarte (1), des Betrachtungszeitraums in einzelne Zeitschritte mit festgelegten Zeitschrittgrößen, und

Berechnen, durch die Ladeleitwarte (1), mittels des linearen Optimierungsalgorithmus eine in jedem Zeitschritt zu ladende elektrische Leistung als Ladeprofil.

3. Verfahren nach einem der vorhergehenden Ansprüche, wobei die lineare Optimierung unter Berücksichtigung einer an dem Betriebshof (3) verfügbaren Anzahl von Ladepunkten (3a), einer gegebenenfalls vorhandenen Gruppierung der Ladepunkte (3a), einer gegebenenfalls vorhandenen maximalen elektrischen Ladeleistung des Ladepunktes (3a) und/oder der Gruppierung, einer Absicherung der Ladepunkte (3a) und/oder der gegebenenfalls vorhandenen Gruppierung, einer Batteriekapazität des Elektrofahrzeugs (2) und/oder einer gewünschten Erhöhung einer Batteriekapazität des Elektrofahrzeugs (2), eines erwarteten Strompreisverlaufs während des Betrachtungszeitraums und/oder, in Abhängigkeit von einer Außentemperatur an dem Elektrofahrzeug (2), einer Vorkonditionierung erfolgt.

4. Verfahren nach einem der vorhergehenden Ansprüche, mit den Schritten:

   Berechnen, durch die Ladeleitwarte (1), einer Rückfall-Ladeleistung für einen gegebenenfalls verbleibenden Teil der Elektrofahrzeuge (2), deren Steuerungen (4) nicht in Kommunikation mit der Ladeleitwarte (1) stehen, in Abhängigkeit von der an dem Betriebshof (3) verfügbaren elektrischen Ladeleistung, und

   falls keine Kommunikation (5) mit einem Elektrofahrzeug (2) möglich ist, kontinuierliches Laden des Elektrofahrzeugs (2) bis zur geplanten Abfahrtszeit.

5. Verfahren nach dem vorhergehenden Anspruch, mit dem Schritt:
   Subtrahieren der berechneten Rückfall-Ladeleistung von der an dem Betriebshof (3) verfügbaren elektrischen Ladeleistung und, und Berücksichtigung der verbleibenden an dem Betriebshof verfügbaren elektrischen Ladeleistung, Berechnen des Ladeprofils für den anderen Teil der Elektrofahrzeuge (2).

6. Verfahren nach einem der vorhergehenden Ansprüche, wobei das jeweilige Ladeprofil eine maximal zulässige Ladeleistung an dem jeweiligen Ladepunkt (3a) und vorzugsweise eine Rückfall-Ladeleistung, welche die Ladeleistung bei einem Unterbruch der Kommunikation (5) definiert, eine Gültigkeitsdauer und/oder vorzugsweise eine Vorkonditionierungsanfrage umfasst.

7. Verfahren nach dem vorhergehenden Anspruch, umfassend die Rückfall-Ladeleistung und die Gültigkeitsdauer, und mit dem Schritt:

   Prüfen, durch die Steuerung (4), auf Erhalt einer neuen maximal zulässigen Ladeleistung innerhalb der Gültigkeitsdauer und

   verneinendenfalls Substituieren der jeweiligen maximal zulässigen Ladeleistung durch die Rückfall-Ladeleistung,

   Aufladen der jeweiligen Batterie mit der Rückfall-Ladeleistung, und

   im Falle einer Vorkonditionierung, Abbrechen derselben.

8. Verfahren nach einem der vorhergehenden Ansprüche, wobei das Prüfen ein Erfassen der Außentemperatur an dem jeweiligen Elektrofahrzeug (2) und/oder ein Erfassen eines Batteriesteuerung-bezogenen Ladestroms und/oder einer Ladespannung umfasst, der Ladezustand einen Batterie-bezogenen relativen Ladezustand, einen Batteriestrom und/oder eine Batteriespannung umfasst, und/oder das Prüfen auf Verbindung mit dem Ladepunkt (3a) ein Erfassen eines Ladepunkt-bezogenen Ladestroms und/oder einer Ladespannung umfasst.

9. Verfahren nach einem der vorhergehenden Ansprüche, wobei die lineare Optimierung unter Verwendung eines Innere-Punkte-Verfahrens erfolgt.

10. Verfahren nach einem der vorhergehenden Ansprüche, mit dem Schritt:
    Ausschließen des Teils der Elektrofahrzeuge (2) von dem Berechnen des Ladeprofils, welche gemäß dem vorherigen Prüfen nicht an einer Position auf dem Betriebshof (3) und/oder nicht mit einem Ladepunkt (3a) verbunden sind.

11. Verfahren nach einem der vorhergehenden Ansprüche, wobei die Ladeleitwarte (1) eine Datenbank umfasst, in welcher die an dem Betriebshof (3) verfügbare elektrische Ladeleistung, die maximalen elektrischen Ladeleistung des Ladepunktes (3a), die Einsatzplanung mit geplanter Abfahrzeit und Route, der Betrachtungszeitraum und/oder eine Batteriekapazität des Elektrofahrzeugs (2) hinterlegt sind, und mit dem Schritt:

Hinterlegen der berechneten Ladeprofile in der Datenbank.

**12.** Verfahren nach einem der vorhergehenden Ansprüche, mit dem Schritt:
Vernachlässigen in Zusammenhang mit Anspruch 3 eine gegebenenfalls vorhandene Vorkonditionierung.

**13.** Computergestützte zentrale Ladeleitwarte (1), ausgestaltet zum Durchführen eines Verfahrens nach einem der vorhergehenden Ansprüche.

**Claims**

**1.** A method for central charging control of a plurality of electric vehicles (2), in particular in a depot (3), with a computer-assisted central charging control room (1), which is configured for wireless communication (5) with control units (4) provided in the various electric vehicles (2), wherein the electric vehicles (2) can be connected to a charging point (3a) of the depot (3) in order to charge their respective batteries in accordance with a charging profile comprising at least one time sequence of an energy volume that can be charged during a review period, said method having the following steps:

checking, by the charging control room (1) by means of communication (5) with the control units (4) of the electric vehicles (2), what state of charge their respective batteries have, at what position the electric vehicles (2) are located, and/or a state of connection of the electric vehicles (2) to the charging point (3a), and transmitting the result of this check to the charging control room (1),
selecting, by the charging control room (1), the electric vehicles (2) to be taken into consideration when calculating charging profiles on the basis of operational schedules of the various electric vehicles (2), the position of the electric vehicles (2), and/or the state of connection to the charging point (3a),
calculating, by the charging control room (1), the charging profile for each electric vehicle (2) to be taken into consideration on the basis of the position in the depot (3), connection to the charging point (3a) and/or the operational schedule, for a review period by means of a linear optimisation algorithm under consideration of an electrical charging capacity available at the depot (3), a scheduled departure time in accordance with the operational schedule, and a required volume of electrical power in view of a scheduled route in accordance with the operational schedule,
transmitting the calculated charging profile from the charging control room (1) to the electric vehicle (2) and charging the battery of the electric vehicle (2) in accordance with the corresponding charging profile at the charging point (3),

**characterised by** the step, prior to the transmitting of the calculated charging profile, of verifying the calculated charging profile and, in the event of a calculation error, re-calculating the charging profile without taking into account electric vehicles (2) that cannot be charged with the required volume of electrical power with the previously calculated charging profile before the scheduled departure time.

**2.** The method according to the preceding claim, comprising the following steps:

dividing, by the charging control room (1), the review period into individual time steps with fixed time step sizes, and
calculating, by the charging control room (1), by means of the linear optimisation algorithm, an electrical power to be charged in each time step as charging profile.

**3.** The method according to either one of the preceding claims, wherein the linear optimisation is performed under consideration of a number of charging points (3a) available in the depot (3), a possible grouping of the charging points (3a), a possible maximum electrical charging capacity of the charging point (3a) and/or the grouping, a safeguarding of the charging points (3a) and/or the possible grouping, a battery capacity of the electric vehicle (2) and/or a desired increase in the battery capacity of the electric vehicle (2), an anticipated electricity price profile during the review period and/or, depending on an external temperature of the electric vehicle (2), a preconditioning.

**4.** The method according to any one of the preceding claims, comprising the following steps:

calculating, by means of the charging control room (1), a drop-off charging capacity for a possible remaining portion of the electric vehicles (2), the control units (4) of which are not in communication with the charging control room (1), depending on the electrical charging capacity available at the depot (3), and
if communication (5) with an electric vehicle (2) is not possible, continuously charging the electric vehicle (2) until the scheduled departure time.

5. The method according to the preceding claim, having the following step:
subtracting the calculated drop-off charging capacity from the electrical charging capacity available at the depot (3) and calculating the charging profile for the other portion of electric vehicles (2) under consideration of the remaining electrical charging capacity available at the depot.

6. The method according to any one of the preceding claims, wherein the charging profile in question comprises a maximum permissible charging capacity at the corresponding charging point (3a) and preferably has a drop-off charging capacity, which defines the charging capacity in the event of an interruption of the communication (5), a period of validity and/or preferably a preconditioning request.

7. The method according to the preceding claim, comprising the drop-off charging capacity and the period of validity, and having the following step:

checking, by the control unit (4), whether a new maximum permissible charging capacity has been received within the period of validity, and
if not, substituting the current maximum permissible charging capacity with the drop-off charging capacity, charging the battery in question with the drop-off charging capacity, and
in the event of a preconditioning, aborting said preconditioning.

8. The method according to any one of the preceding claims, wherein the check comprises measuring the external temperature at the electric vehicle (2) in question and/or measuring a battery-control-unit-based charging current and/or a charging voltage, the state of charge comprises a battery-based relative state of charge, a battery current and/or a battery voltage, and/or the checking of a connection to the charging point (3a) comprises measuring a charging-point-based charging current and/or a charging voltage.

9. The method according to any one of the preceding claims, wherein the linear optimisation is performed with use of an interior-point method.

10. The method according to any one of the preceding claims, having the following step:
excluding, from the calculation of the charging profile, the portion of the electric vehicles (2) not located at a position in the depot (3) and/or not connected to a charging point (3a) in accordance with the previous checks.

11. The method according to any one of the preceding claims, wherein the charging control room (1) comprises a database, in which the electrical charging capacity available at the depot (3), the maximum electrical charging capacity of the charging point (3a), the operational schedule with scheduled departure time and route, the review period and/or a battery capacity of the electric vehicle (2) are stored, said method having the following steps:
storing the calculated charging profiles in the database.

12. The method according to any one of the preceding claims, comprising the following step:
disregarding, in conjunction with claim 3, a possible preconditioning.

13. A computer-assisted central charging control room (1), configured for carrying out a method according to any one of the preceding claims.

**Revendications**

1. Procédé de commande de charge centrale d'une pluralité de véhicules électriques (2), notamment, dans un dépôt (3), avec un centre de commande de charge (1) central informatisé, lequel est équipé de commandes (4) prévues dans les véhicules électriques (2) respectifs pour une communication (5) sans fil, et où les véhicules électriques (2) peuvent être reliés, pour la recharge de leur batterie respective selon un profil de charge, comprenant au moins le déroulement dans le temps de la charge d'une quantité d'énergie pendant un intervalle de temps de prise en compte, avec un point de charge (3a) du dépôt (3), présentant les étapes :

de vérification, par le centre de commande de charge (1), au moyen d'une communication (5) avec les commandes (4) des véhicules électriques (2), de l'état de charge de la batterie respective, de la position dans laquelle se trouve le véhicule électrique (2) respectif, et/ou d'un état de connexion du véhicule électrique (2) respectif avec le point de charge (3a) et de transmission d'un résultat de vérification au centre de commande de charge (1),

de choix, par le centre de commande de charge (1), des véhicules électriques (2) dont il faut tenir compte lors du calcul des profils de charge à l'aide d'un planning opérationnel du véhicule électrique (2), de la position du véhicule électrique (2) respectif et/ou de l'état de connexion avec le point de charge (34.a),

de calcul, par le centre de commande de charge (1) du profil de charge pour chaque véhicule électrique (2) se trouvant dans le dépôt (3) à l'aide de la position, connecté avec le point de charge (3a) et/ou dont il faut tenir compte selon le planning opérationnel pour un intervalle de temps pris en compte au moyen d'un algorithme d'optimisation linéaire en tenant compte de la puissance de charge électrique disponible dans le dépôt (3), d'une heure de départ prévue selon la planification opérationnelle et d'une quantité d'énergie électrique nécessaire en fonction de l'itinéraire prévu selon la planification opérationnelle,

de transmission du profil de charge calculé du centre de commande de charge (1) vers le véhicule électrique (2), et de charge de la batterie du véhicule électrique (2) selon le profil de charge respectif au niveau du point de charge (3), **caractérisé par** l'étape, avant la transmission du profil de charge calculé, de la vérification du profil de charge calculé, et, dans le cas d'une erreur de calcul, un nouveau calcul du profil de charge en négligeant des véhicules électriques (2) lesquels n'ont pas pu charger la quantité d'énergie électrique nécessaire pour l'heure de départ prévue avec le profil de charge calculé auparavant.

2. Procédé selon la revendication précédente, présentant les étapes :

de subdivision, par le centre de commande de charge (1), de l'intervalle de temps pris en compte en intervalles de temps avec des tailles d'intervalles de temps définis, et
de calcul, par le centre de commande de charge (2), au moyen de l'algorithme d'optimisation linéaire, d'une puissance électrique à charger dans chaque intervalle de temps en tant que profil de charge.

3. Procédé selon l'une des revendications précédentes, dans lequel l'optimisation linéaire a lieu en tenant compte d'un nombre de points de charges (3a) disponibles au niveau du dépôt (3), de la présence d'un éventuel regroupement des points de charge (3a), d'une puissance de charge électrique maximale présente éventuellement au point de charge (3a) et/ou au regroupement, d'une protection des points de charge (3a) et/ou de l'éventuel regroupement présent, d'une capacité de batterie du véhicule électrique (2) et/ou d'une augmentation souhaitée d'une capacité de batterie du véhicule électrique (2), d'une évolution du prix du courant prévue pendant l'intervalle de temps pris en compte et/ou, d'un pré-conditionnement en fonction d'une température extérieure au niveau du véhicule électrique (2).

4. Procédé selon l'une des revendications précédentes, avec les étapes :

de calcul, par le centre de commande de charge (1), d'une puissance de charge de réserve pour une partie restante des véhicules électriques (2) dont les commandes (4) ne sont pas en communication avec le centre de commande de charge (1) en fonction de la puissance de charge électrique disponible au niveau du dépôt (3), et dans le cas où aucune communication (5) n'est possible avec le véhicule électrique (2) la charge en continu du véhicule électrique (2) jusqu'à l'heure de départ prévue.

5. Procédé selon l'une des revendications précédentes, avec l'étape :
de soustraction de la puissance de charge de réserve calculée de la puissance de charge électrique disponible au niveau du dépôt (3) et de prise en compte de la puissance de charge électrique disponible restante au niveau du dépôt, de calcul du profil de charge pour l'autre partie des véhicules électriques (2).

6. Procédé selon l'une des revendications précédentes, dans lequel le profil de charge respectif comprend une puissance de charge permise maximale au niveau du point de charge (3a) respectif et de préférence une puissance de charge de réserve, laquelle définit la puissance de charge lors d'une interruption de la communication (5), une durée de validité et/ou de préférence, une question de pré-conditionnement.

7. Procédé selon l'une des revendications précédentes, comprenant la puissance de charge de réserve et la durée de validité, et avec l'étape :

de vérification, par la commande (4), de l'obtention d'une nouvelle puissance de charge permise maximale en l'espace de la durée de validité, et

de substitution dans le cas de la négative, de la puissance de charge permise maximale par la puissance de charge de réserve,

de recharge de la batterie respective avec la puissance de charge de réserve, et

dans le cas d'un pré-conditionnement, l'interruption de celui-ci.

8. Procédé selon l'une des revendications précédentes, dans lequel la vérification comprend une détection de la température extérieure au niveau du véhicule électrique (2) respectif, et/ou une détection d'un courant de charge concernant la commande de batterie et/ou d'une tension de charge, de l'état de charge d'un état de charge relatif en fonction de la batterie, d'un courant de batterie et/ou d'une tension de batterie, et/ou la vérification d'une connexion avec le point de charge (3a) comprend une détection d'un courant de charge et/ou d'une tension de charge relatifs au point de charge.

9. Procédé selon l'une des revendications précédentes, dans lequel l'optimisation linéaire a lieu moyennant l'emploi d'une méthode de points intérieurs.

10. Procédé selon l'une des revendications précédentes, avec l'étape :
d'exclusion d'une partie des véhicules électriques (2) avant le calcul du profil de charge, lesquels ne sont pas reliés à une position sur le dépôt (3) et/ou ne sont pas reliés avec un point de charge (3a) selon la vérification précédente.

11. Procédé selon l'une des revendications précédentes, dans lequel le centre de commande de charge (1) comprend une banque de données dans laquelle sont consignés la puissance de charge électrique disponible au niveau du dépôt (3), la puissance de charge électrique maximale du point de charge (3a), la planification opérationnelle avec l'heure de départ et l'itinéraire, l'intervalle de temps pris en considération et/ou une capacité de batterie du véhicule électrique (2), et avec l'étape :
de consignation des profils de charge calculés dans la banque de données.

12. Procédé selon l'une des revendications précédentes, avec l'étape :
de négligence de la présence d'un éventuel pré-conditionnement en corrélation avec la revendication 3.

13. Centre de commande de charge (1) central informatisé conçu pour l'exécution d'un procédé selon l'une des revendications précédentes.

Fig. 1

Fig. 2

Fig. 3

TE-ST-3

Fig. 4

TE-ST-1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015041366 A1